# EUROPEAN PATENT SPECIFICATION

(11) **EP 1 556 258 B1**
(45) Date of publication and mention of the grant of the patent: **10.05.2006**
(21) Application number: 02769800.0
(22) Date of filing: 28.10.2002
(51) Int. Cl.: B60R 25/00

(54) **METHOD OF PREVENTING THEFT OF VEHICLES USING INTENSIVE MARKING**
METHODE ZUR VERHINDERUNG DES DIEBSTALS VON KRAFTFAHRZEUGE DURCH INTENSIVES MARKIEREN
PROC D POUR PR VENIR LE VOL DE V HICULES PAR UN MARQUAGE INTENSIF

(43) Date of publication of application: 27.07.2005
(73) Proprietor: Marquage Antivol Sherlock, Inc., Longueil, Québec J4K 3R2 (CA)
(72) Inventor: JODOIN, Pierre-Paul, Dunham, Québec J0E 1M0 (CA)
(74) Representative: Jenkins, Peter David
(86) International application number: PCT/CA2002/001624
(87) International publication number: WO 2004/037618

(56) References cited:
- EP-A- 0 673 009
- EP-A- 0 984 380
- DE-A- 4 201 894
- US-A- 5 083 814

## Description

### FIELD OF THE INVENTION

This invention relates to a method used for preventing theft of expensive articles such as vehicles using intensive markings, and particularly to a method of providing vehicle anti-theft services to clients through a service network using intensive markings of parts of the vehicle.

### BACKGROUND OF THE INVENTION

With regard to automobile identification markings, it is noted that currently, automobile manufacturers usually place at least two identification marks on their automobiles. One mark is usually impressed into the motor block and the other is usually a plate welded somewhere onto the frame. These markings are utilized not only to identify the vehicle for title and registration purposes, but also to reduce car thefts by making it theoretically impossible for stolen vehicles to be sold because the registry would recognize the identification numbers as being those of a stolen vehicle. Unfortunately, these identification marks can be altered or obliterated with the expenditure of time and effort by a skilled individual.

In the prior art there are marking processes for engraving permanent and unalterable identification markings on surfaces of a material, such as glass, plastic and other synthetic materials, and metal. Such marking processes, for example, use an abrasive blasting gun assembly in abrading a code provided in a stencil which is positioned against a surface to be abraded, as described in United States Patents 4,674,239, entitled PORTABLE ABRASIVE BLASTING GUN ASSEMBLY which issued to Jodoin on June 23,1987, and 4,048, 918, entitled STENCILING APPARATUS AND IDENTIFICATION SYSTEM which issued to Peck on September 20,1977. Permanent markings on the insured vehicle give the insurer an opportunity to establish the existence of the insurance coverage of the marked vehicles and therefore provides a deterrent effect to thieves who will be unable to obtain top dollar for those vehicles which can be so easily identified.

Reference is also made to German Patent DE 42 01 894 A1 which discloses a system employing the stenciling apparatus as above disclosed by Applicant's previous patents. However, that system is not as elaborate and does not provide security when processing information on used vehicles as well as new-vehicles and wherein in the processing the information is circulated between Insurance Companies, Police Departments and National Custom Departments wherein to provide security to the client and to identify previously stolen vehicles. Also, there is a need to provide a certification after such verifications and therefore a client requires immediate temporary certification from the service center as well as an official certification after processing of all collected information and verification.

Nevertheless, there are continuing efforts to develop a better method of preventing theft of vehicles using intensive marking and there is a need for a method of providing vehicle anti-theft services to clients.

### SUMMARY OF THE INVENTION

One object of the present invention is to provide a method of preventing theft of vehicles using intensive markings which are permanently marked on insured vehicles.

Another object of the present invention is directed to a method of preventing theft of vehicles by providing anti-theft services to clients through a service network.

In accordance with one aspect of the present invention, a method of preventing theft of vehicles using intensive marking comprises the steps of: establishing a service network including a service center having a databank for data processing and storage, and at least one service station providing anti-theft service to clients; at the service station, verifying and collecting information on markings marked on a plurality of parts of a vehicle and identification information of a client owning the vehicle, the markings including an intensive marking alphanumerical code which is permanently marked thereon and allows cross-referencing with the vehicle identification number thereof, and at least one part of the vehicle having a visible logo identifying the anti-theft service; sending the collected information from the service station to the databank of the service center; at the service center, processing and storing the received information; and issuing a certificate corresponding with the vehicle, to the client and to an insurance company.

The intensive marking alphanumerical code preferably identifies a region of origin of the owner of the vehicle. The intensive marking alphanumerical code is preferably permanently engraved on surfaces of various parts of the vehicle. For example, 50 or more of the most saleable parts of the vehicle should be engraved with the permanently marked intensive marking alphanumerical code. The visible logo should be placed on at least one part (but preferably more) of the vehicle where it will be located, sized and coloured to be clearly visible from a distance.

The intensive marking alphanumerical code which will be referred to as IMAC hereinafter, uses a well recognized international coding system for identifying the region of origin of the owner of the vehicle. For example, IATA uses an international coding for country locations, such as YYZ, YUL and YVR, to identify Canadian regions, namely Toronto, Montreal and Vancouver, respectively. The IMAC would allow police, customs and public authorities anywhere in the world to have access to a universal databank in order to instantaneously identify the originating region of the vehicle and its owner, which is an essential tool to fight illegal vehicle exportation. It is difficult for international black market dealers to trade in vehicles intensively marked with.their originating region because the black market depends on maintaining secrecy and confusion regarding the point of origin of goods being transacted.

The IMAC also allows the insurance industry to have its own serial number on the vehicle for the rest of the existence of the vehicle and to facilitate a direct access to a databank. By its short and compact composition, the IMAC facilitates the inscription in tight spaces and avoids transcription errors.

The anti-theft service network according to the present invention provides a convenient anti-theft service to clients and allows the insurers to visibly mark the insured vehicle with the visible logo and the IMAC, thereby making the vehicle less attractive to thieves. The anti-theft services can be applied to road and off-road vehicles such as motorcycles, cars, light and heavy trucks, and all kinds of water vehicles.

Other advantages and features of the present invention will be better understood with reference to a preferred embodiment of the present invention described hereinafter.

### BRIEF DESCRIPTION OF THE DRAWINGS

Having thus generally described the nature of the present invention, reference will now be made to the accompanying drawings, showing by way of illustration the preferred embodiment thereof, in which:
Fig. 1 is a block diagram showing a service network for vehicle anti-theft services provided to clients according to one embodiment of the present invention;
Figs. 2A and 2B comprise a single block diagram showing a method for providing vehicle anti-theft services to clients through the network of Fig. 1; and
Fig. 3 is a logo design for identifying the vehicle anti-theft services provided by the network of Fig. 1.

### DETAILED DESCRIPTION OF THE PREFERRED EMBODIMENT

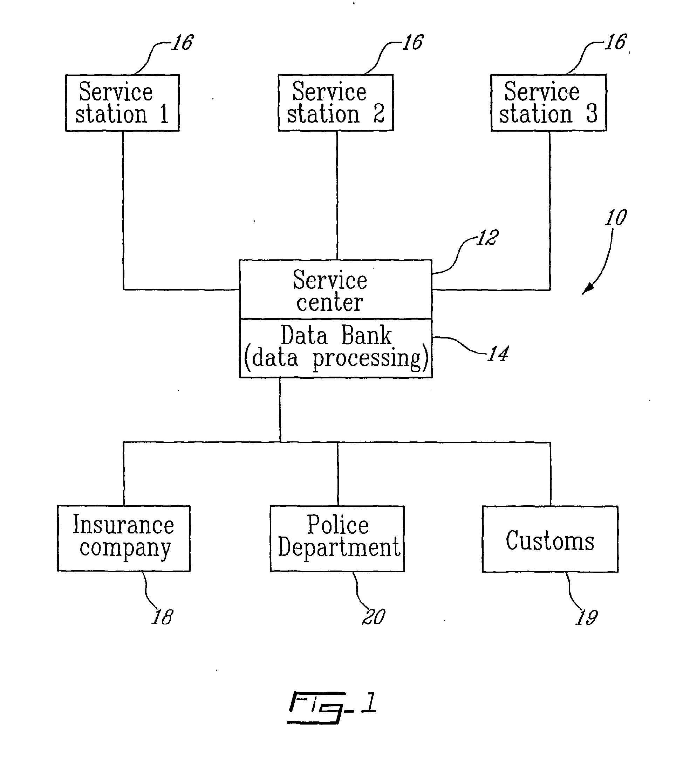

Fig. 1 schematically illustrates a vehicle anti-theft service network, generally indicated by numeral 10 according to one embodiment of the present invention. The network 10 includes a service center 12 which is usually located in the headquarters of the anti-theft service company (not shown) and has a computerized databank 14. Nevertheless, the service center 12 can be in a separate location from the headquarters of the service company. The network 10 includes a number of service stations 16 and at least one trained qualified agent works at each station to provide anti-theft services to clients. Each station 16 is linked to the databank 14 of the service center 12, for example by telephone lines, facsimile, but preferably by computer network, so that the agent at the service station 16 has access to the databank 14 of the service center 12. There are three service stations 16 shown in Fig. 1 for exemplarily illustrating the service network 10. However, it is understood that the number of service stations 16 does not constitute part of the invention. Preferably the service network 10 is supported by the insurance company 18. A police department 20 and a national customs department 19 are connected to the network 10. Therefore, the databank 14 of the service center 12 is preferably linked to computers in the insurance company 18, police department 20 and the national and international customs departments 19, through a computer network.

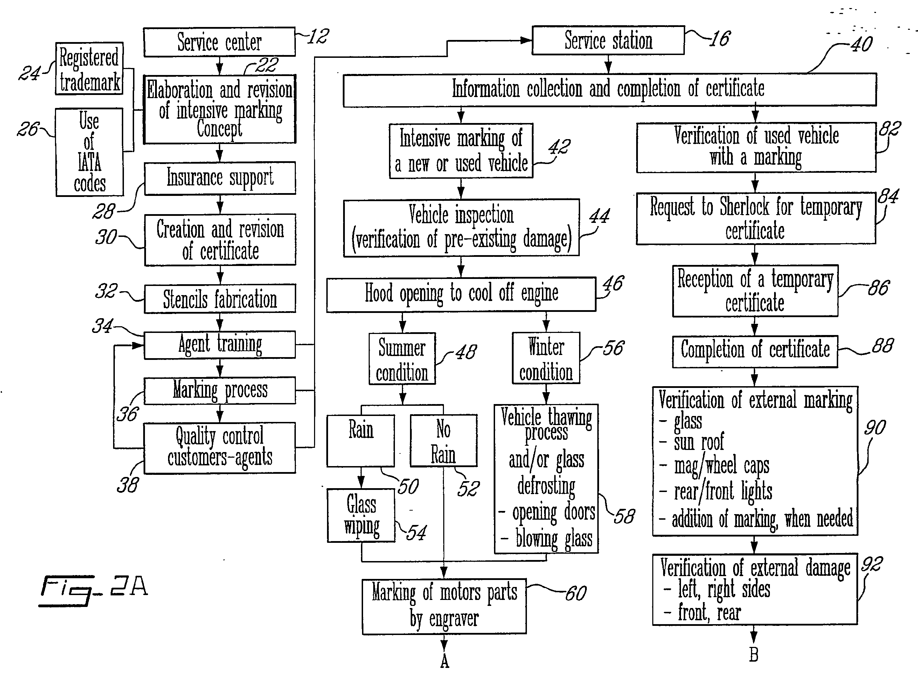

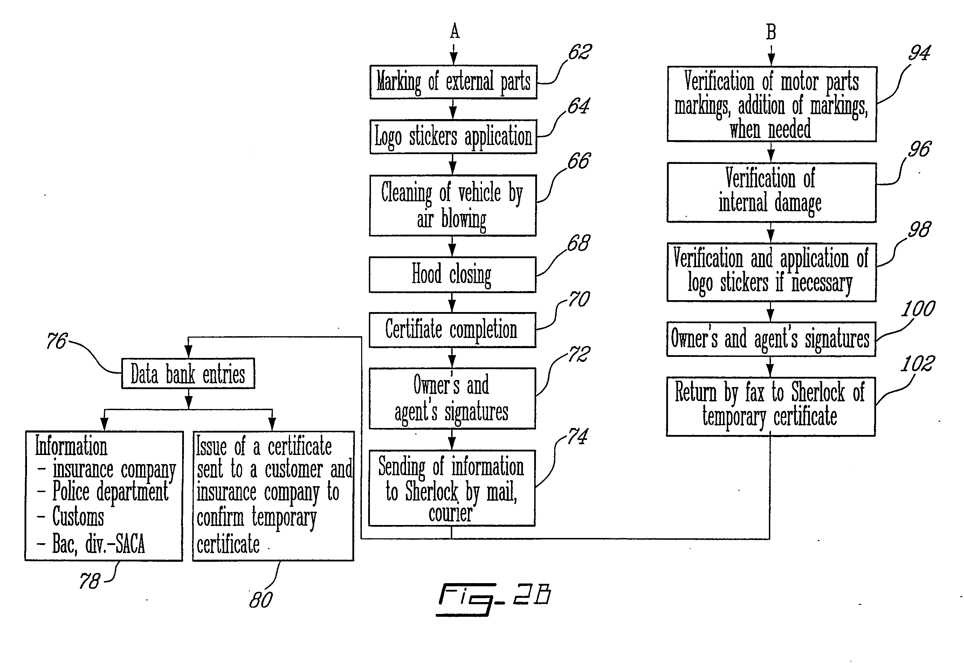

Further referring to Figs. 2A and 2B, the vehicle anti-theft service is planned and administered at the service center 12 or the anti-theft service company headquarters. The planning and administration of the vehicle anti-theft service begins with creation of the intensive markings and rules for applying the intensive marking, as illustrated in step 22. The markings include an intensive marking alphanumerical code (IMAC) which is permanently marked on, for example, more than 50 of the most saleable parts of a vehicle, and a visible logo identifying the anti-theft service.

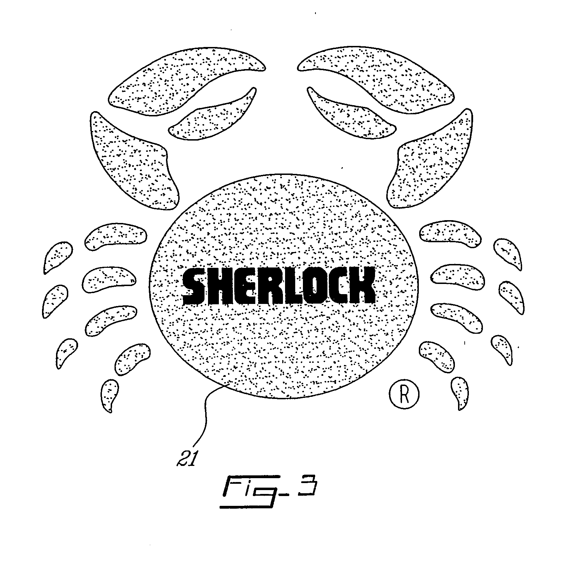

As an example, the visible logo 21 used in this embodiment is a crab design as shown in Fig. 3, which may have a specific colour such as gold and the company name or service name is printed thereupon. The visible logo 21 can be provided as a sticker to be applied to at least one visible external part of the vehicle, but more logo stickers are desirable for a single vehicle in order to increase the visibility of the presence of the anti-theft service in order to clearly identify the vehicle as being covered by the anti-theft service whereby to provide a deterrent to thieves. The logo 21 identifying the anti-theft service should be registered as a trademark thereof, as shown in step 24.

The IMAC for example, first includes capital letters in accordance with IATA coding for identifying the region of the origin of the owner of the vehicle having been insured, such as YYZ, YUL and YVR as mentioned above, and as shown in step 26. Of course, other well recognized coding may be used in the IMAC for identifying the region or country of origin of the vehicle owner.

Following the first three capital letters, the IMAC further includes a sequence of combined digits and letters to facilitate a direct access to the databank 14 of the service center 12 where the markings of the IMAC of all vehicles marked by the network 10 are stored, which will be described below. Therefore, the IMAC allows a cross-reference with the vehicle identification number (VIN) thereof which is attached to the vehicle and/or the engine block of the vehicle by the vehicle manufacturer.

As shown in step 28, the vehicle anti-theft service is based on insurance company support and therefore a corresponding agreement should be negotiated between the vehicle anti-theft service network 10 and the insurance company 18 so that a limited warrantee against theft in the eventuality of non-recovery of a stolen insured vehicle can be provided to clients through the anti-theft service network 10.

A certificate for acknowledging the registration in the vehicle anti-theft service will be provided to a client who's vehicle has been insured and marked with the service markings, therefore the certificate form should be created as indicated in step 30.

The IMAC according to this embodiment, is engraved on the surfaces of various motor parts or on external parts of a vehicle by using a blasting gun assembly for abrading a code provided in stencils which are positioned against a surface to be abraded, as described in United States Patent 4,674,239. Therefore, the stencils for providing various intensive markings in accordance with the predetermined IMAC should be fabricated and distributed to the service stations 16, as indicated in step 32.

As indicated in steps 34 to 38, an agent training program is organized to train the service agents to learn the marking process so that they are able to provide the intensive markings to the clients' vehicles. The agent training also teaches the agents how to provide a quality service to clients which should be performed step-by-step at the service stations 16 to ensure the quality control of the provided service.

The vehicle anti-theft service to the clients is provided at the individual service stations 16 which are situated in different locations in order to best serve clients in a large geographical area. The function of each service station 16 includes information collection and completion of a certificate as shown in step 40. This generally involves the agent at the service station 16 verifying and collecting information from markings on the parts of the vehicle including the IMAC and the visible logo 21, as well as the identification information of the client owning the vehicle. The collected information is then sent from the service station 16 to the databank 14 of the service center 12 through the direct link therebetween. The collected information received at the service center 12 is then processed and the certificate identifying the vehicle anti-theft service corresponding to that particular vehicle is issued to the client at the service station 16 and the insurance company 18 through the direct link between the service center 12 and the service station 16, as well as between the service center 12 and the insurance company 18.

More specifically, the information collection and completion of certificate procedure indicated in step 40, can be further broken down into steps in order to ensure service quality control. The steps of the information collection and completion of certificate procedure can be divided into two groups: one group is for service to a new or used vehicle which does not have its IMAC and logo 21, and the other group is for service of a used vehicle which does have an existing IMAC and the logo 21.

As indicated in step 42, when a new or used vehicle which does not have its IMAC and the logo 21 is brought to the service station 16, the agent at the service station 16 applies an IMAC which is provided to the vehicle and does not match any existing IMAC stored in the databank 14.

The vehicle inspection for verification of pre-existing damage of the vehicle, particularly when the vehicle is a used one, is indicated in step 44 and begins with hood opening to cool off the engine of the vehicle, as shown in step 46. Steps 48 to 54 show the verification procedure performed under summer weather conditions and steps 56 and 58 show the verification procedure performed under winter weather conditions. The specific inspection points of the vehicle can be decided by the administrator at the service center 12 and set out in regulations to be followed by the agents at the service stations 16.

Upon completion of the verification of pre-existing damage of the vehicle, the most saleable parts of the vehicle, preferably not less than 50, are selected according to the instruction manual to be permanently marked with the given IMAC by engraving for example, using an abrasive blasting gun assembly with a selection of the stencils which in combination provide the given IMAC. The marking performance begins with the motor parts. After the selected motor parts are marked with the given IMAC, the marking process is performed on the selected external parts, such as windshield glass, wheel rims, etc., as indicated in steps 60 and 62. The visible logo 21 is provided on a sticker and is then applied to selected positions on the vehicle in order to identify the anti-theft service with which the vehicle is insured, as indicated in step 64. Steps 66 and 68 illustrate that the marking process and vehicle inspection are completed with the cleaning of the vehicle by air blowing and closing of the hood.

Steps 42 to 68 are an example of the information collection procedure. The sequence of the performed steps may change and more or less steps can be performed.

The certification completion of step 70 involves filling out the certificate form designed by the service center 12. The certificate forms are distributed as paper copies from the service center 12 or can be printed at the service station 16 through the direct link to the databank 14 at the service center 12. The certificate form generally contains information entries regarding the client's identification information, such as name, address and telephone number, as well as the client's insurance company name and policy number. The certificate form also contains entries of the vehicle information, including the make, model, year, identification number and other information. When the certificate form is prepared for a used vehicle, information is also entered on the certificate, listing information about the existing damage. Finally, the given IMAC is recorded on the certificate form. Upon completion of the certificate form with all collected information, the client and the agent sign the certificate, as indicated in step 72. The information contained in the certificate is instantly transmitted from the service station 16 to the databank 14 of the service center 12 through the direct link therebetween for databank entry and storage. However, a paper copy of the certificate with the client's and agent's signatures will be sent by mail or courier to the service center 12, as shown in step 74.

When the databank 14 of the service center 12 receives the certificate information, this information is kept for eventual reference and may be made available to authorized persons. At the same time, the certificate of insured anti-theft service is issued to the client. Blocks 76 to 80 illustrate those final steps.

Steps 82 to 102 illustrate the procedure of information collection and completion of certificate step-by-step when the agent at a service station 16 is processing a used vehicle which does have its existing IMAC thereon.

When a used vehicle with its existing IMAC is brought to the service station 16, the agent recognizes the existing IMAC on the vehicle and sends the client's identification information together with the IMAC information to the databank 14 of the service center 12 together with a request for a temporary certificate. The received information data is processed at the service center 12 and the temporary certificate is issued. Upon receipt of the temporary certificate, the service station agent completes the certificate of the insured anti-theft service. The completion of the certificate begins with verification of the external markings of the IMAC, for example, on glass, sun roof, wheel caps, rear and front lights, and other motor parts. Additional IMAC engraving may be added to those vehicle parts which are not previously marked with the IMAC. Meanwhile verification of external damage on the vehicle is conducted.

Upon completion of the verification of external marking and external damage on the vehicle, the agent further verifies the markings of the IMAC on the motor parts, and engraves the IMAC on additional motor parts which were not previously marked with the IMAC to comply with the instruction manuals.

The existing logo 21 on the vehicle is verified and more logo stickers may be applied to the vehicle when necessary.

The client and the agent then sign the temporary certificate which the agent has filled out with the client identification information and the vehicle information. The collected information is transmitted to the databank 14 of the service center 12 through the direct link between the service station 16 and the service center 12, and the original is then issued by the service center to the customer. A paper copy of the temporary certificate with the client's and agent's signatures is sent to the customer.

Steps 82 to 98 are an example of the information collection procedure. The sequence of the performed steps may change and more or less steps can be performed.

In steps similar to the procedure for providing anti-theft service to a new vehicle as described above, the databank 14 of the service center 12 processes the information collected through the steps 82 to 102 and issues a certificate to the client as confirmation of the temporary certificate which the client obtained at the service center 16 when the vehicle was insured with the anti-theft service. The information relating to the insured vehicle and the owner thereof, is also transmitted from the service center 12 to the insurance company 18, the police department 20 and the national customs department 19.

It should be noted that the above described embodiment with reference to Figs. 2A and 2B is an example of the present invention. Generally, the steps illustrated by the blocks of the diagram shown in Figs. 2A and 2B may be changed in sequence. It should also be noted that in the above described vehicle anti-theft service network 10, the individual service stations 16, the police department 20 and the national customs department 19 may not necessarily be directly linked to the databank 14 of the service center 12, and communication therebetween can be conducted by means of telephone line, facsimile, mail and courier service.

## Claims

1. A method for preventing theft of vehicles using intensive marking comprising the steps of:
i) establishing a service network including a service center having a databank for data processing and storage, and at least one service station providing anti-theft marking service to clients;
ii) effecting permanent markings of an alphanumerical code at said service station, and verifying and collecting information on said markings, said markings being effected on a plurality of parts of a vehicle, said marking containing identification information of a client owning the vehicle and wherein said alphanumerical code used the IATA codes to identify a country of origin of said vehicle which allows cross-referencing with the vehicle identification number thereof, and at least one part of the vehicle having a visible logo identifying the anti-theft service;
iii) sending the collected information from the service station to the databank of the service center through a computer link;
iv) at the service center, processing and storing the received information;
v) linking the databank of the service network to the at least one service station, the insurance company, a police department and the national customs department, **characterized in that** there is further provided the steps of:
vi) issuing a temporary certificate corresponding with the vehicle, to the client and an insurance company;
vii) identifying used vehicles from new vehicles and imputing any physical damage of said used vehicle into said databank;
viii) storing for further reference said temporary certificate with said service network;
ix) processing collected information associated with said alphanumerical codes and transmitting same to said police department and customs department for verification and recordal; and
x) issuing an official certificate to said clients by said service network.

2. A method as claimed in claim 1 wherein the intensive marking alphanumerical code identifies a region of origin of an owner of the vehicle.

3. A method-as claimed in claim 2 wherein the intensive marking alphanumerical code uses an international coding system for identifying the region of origin of the 5 owner.

4. A method as claimed in claim 2 wherein the intensive marking alphanumerical code is engraved on surfaces of the parts of the vehicle.

5. A method as claimed in claim 1 further comprising a step of installing the markings, including the intensive marking alphanumerical code and the visible logo, on the vehicle at the service station when the vehicle does not have the markings.

6. A method as claimed in claim 5 further comprising a step of communicating with the service center to ensure that the intensive marking alphanumerical code provided to the vehicle does not match any existing intensive marking alphanumerical code stored in the databank.

7. A method as claimed in claim 5 further comprising steps of installing the markings-on motor parts and installing the markings on external parts of the vehicle.

8. A method as claimed in claim 7 wherein not less than 50 parts of the vehicle are provided with the markings.

9. A method as claimed in claim 1 comprising sending a request for a temporary certificate from the service station to the service center when the vehicle already has the intensive marking alphanumerical code and the logo thereon.

10. A method as claimed in claim 9 further comprising steps of verifying the intensive marking alphanumerical code and logo on the individual motor parts and external parts of the vehicle upon the receipt of the temporary certificate from the service center.

11. A method as claimed in claim 10 further comprising adding the intensive marking alphanumerical code to a number of selected un-marked parts of the vehicle.

12. A method as claimed in claim 10 further comprising a step of adding the logo to a number of selected un-marked parts of the vehicle.

13. A method as claimed in claim 4 further comprising a step of obtaining signatures of the client and an agent of the service station on the certificate upon the completion of the verification and collection of the information and the inspection of the existing damages of the vehicle.

## Patentansprüche

1. Verfahren zur Verhinderung des Diebstahls von Fahrzeugen durch intensives Markieren, mit den Schritten:
i) Errichten eines Servicenetzwerks mit einem Servicecenter, das eine Datenbank zur Datenverarbeitung und Datenspeicherung hat, und zumindest einer Servicestation, die Kunden einen Antidiebstahlmarkierungsservice bereitstellt;
ii) Herbeiführen, an der Servicestation, einer permanenten Markierung aus einem alphanumerischen Code und Verifizieren und Sammeln von Informationen über die Markierungen, wobei die Markierungen an einer Vielzahl von Teilen eines Fahrzeugs vorgenommen werden, wobei die Markierung Identifikationsinformationen eines Kunden enthält, dem das Fahrzeug gehört, und wobei der alphanumerische Code die IATA-Codes verwendet, um ein Herkunftsland des Fahrzeugs zu identifizieren, was eine Querbezugnahme auf dessen Fahrzeugidentifikationsnummer erlaubt, und zumindest ein Teil des Fahrzeugs ein sichtbares Logo hat, das den Antidiebstahlservice bezeichnet;
iii) Senden der gesammelten Informationen von der Servicestation an die Datenbank des Servicecenters über eine Computerverbindung;
iv) Verarbeiten und Speichern der empfangenen Informationen an dem Servicecenter;
v) Verbinden der Datenbank des Servicenetzwerks mit der zumindest einen Servicestation, der Versicherungsgesellschaft, einer Polizeidienststelle und der nationalen Zolldienststelle,
**gekennzeichnet durch** die weiteren Schritte:
vi) Vergeben eines dem Fahrzeug entsprechenden temporären Zertifikats an den Kunden und eine Versicherungsgesellschaft;
vii) Unterscheiden zwischen Gebrauchtfahrzeugen und Neufahrzeugen und Zuschreiben jeglicher physikalischer Beschädigung des Gebrauchtfahrzeugs in die Datenbank;
viii) Speichern des temporären Zertifikats für eine weitere Bezugnahme im Servicenetzwerk;
ix) Verarbeiten gesammelter Informationen, die den alphanumerischen Codes zugeordnet sind, und Übertragen selbiger an die Polizeidienststelle und Zolldienststelle zur Verifizierung und Erfassung; und
x) Vergeben eines offiziellen Zertifikats an die Kunden **durch** das Servicenetzwerk.

2. Verfahren gemäß Anspruch 1, wobei der alphanumerische Code der intensiven Markierung ein Herkunftsgebiet eines Eigentümers des Fahrzeugs bezeichnet.

3. Verfahren gemäß Anspruch 2, wobei der alphanumerische Code der intensiven Markierung ein internationales Codesystem zur Bezeichnung des Herkunftsgebiets des Eigentümers verwendet.

4. Verfahren gemäß Anspruch 2, wobei der alphanumerische Code der intensiven Markierung auf Oberflächen von Teilen des Fahrzeugs eingraviert ist.

5. Verfahren gemäß Anspruch 1, weiter mit einem Schritt des Anbringens, an der Servicestation, der Markierungen, die den alphanumerischen Code der intensiven Markierung und das sichtbare Logo umfassen, an dem Fahrzeug, wenn das Fahrzeug die Markierungen nicht hat.

6. Verfahren gemäß Anspruch 5, weiter mit einem Schritt des Kommunizierens mit dem Servicecenter, um sicherzustellen, dass der alphanumerische Code der intensiven Markierung, der für das Fahrzeug vorgesehen ist, nicht mit einem in der Datenbank gespeicherten existierenden alphanumerischen Code der intensiven Markierung übereinstimmt.

7. Verfahren gemäß Anspruch 5, weiter mit Schritten des Anbringens der Markierungen an Motorteilen und des Anbringens der Markierungen an äußeren Teilen des Fahrzeugs.

8. Verfahren gemäß Anspruch 7, wobei nicht weniger als 50 Teile des Fahrzeugs mit den Markierungen versehen werden.

9. Verfahren gemäß Anspruch 1, mit einem Senden einer Anforderung für ein temporäres Zertifikat von der Servicestation an das Servicecenter, wenn an dem Fahrzeug der alphanumerische Code der intensivern Markierung und das Logo bereits angebracht sind.

10. Verfahren gemäß Anspruch 9, zudem mit Schritten des Verifizierens des alphanumerischen Codes der intensiven Markierung und des Logos an den einzelnen Motorteilen und den äußeren Teilen des Fahrzeugs auf den Empfang des vorübergehenden Zertifikats von dem Servicecenter hin.

11. Verfahren gemäß Anspruch 10, zudem mit einem Hinzufügen des alphanumerischen Codes der intensiven Markierung zu einer Anzahl ausgewählter unmarkierter Teile des Fahrzeugs.

12. Verfahren gemäß Anspruch 10, zudem mit einem Schritt des Hinzufügens des Logos zu einer Anzahl ausgewählter unmarkierter Teile des Fahrzeugs.

13. Verfahren gemäß Anspruch 4, zudem mit einem Schritt des Erhaltens von Unterschriften des Kunden und eines Vertreters der Servicestation auf dem Zertifikat auf die Vollendung des Verifizierens und Sammelns der Informationen und des Begutachtens der existierenden Beschädigungen des Fahrzeugs hin.

## Revendications

1. Procédé destiné à empêcher un vol de véhicules utilisant un marquage intensif comprenant les étapes consistant à
i) établir un réseau de service comportant un centre de service ayant une banque de données destiné à un traitement et une mémorisation des données, et au moins un poste de service fournissant un service de marquage anti-vol à des clients ;
ii) effectuer des marquages permanents d'un code alphanumérique au niveau dudit poste de service, et vérifier et collecter des informations concernant lesdits marquages, lesdits marquages étant effectués sur une pluralité de parties d'un véhicule, ledit marquage contenant des informations d'identification d'un client possédant le véhicule et, dans lesquelles ledit code alphanumérique utilise les codes IATA afin d'identifier un pays d'origine dudit véhicule, ce qui autorise un référencement croisé avec le numéro d'identification du véhicule, et au moins une partie du véhicule ayant un logo visible identifiant le service anti-vol ;
iii) envoyer les informations collectées du poste de service vers la banque de données du centre de service au travers d'une liaison par ordinateur ;
iv) au niveau du centre de service, traiter et mémoriser les informations reçues ;
v) relier la banque de données du réseau de service à au moins un poste de service, à la compagnie d'assurance, à un service de police et au service des douanes national, **caractérisé en ce que** des étapes sont en outre prévues et consistent à :
vi) délivrer un certificat temporaire corespondant au véhicule, au client, et à une compagnie d'assurance ;
vii) identifier des véhicules anciens par rapport à des véhicules neufs et entrer des quelconques dégâts matériels dudit véhicule ancien dans ladite banque de données ;
viii) mémoriser, à titre d'une référence supplémentaire, ledit certificat temporaire à l'aide dudit réseau de service ;
ix) traiter des informations collectées associées auxdits codes alphanumériques et transmettre ces dernières auxdits service de police et service des douanes pour une vérification et une inscription ; et
x) délivrer un certificat officiel auxdits clients grâce audit réseau de service.

2. Procédé selon la revendication 1, dans lequel le code alphanumérique de marquage intensif identifie une région d'origine d'un propriétaire du véhicule.

3. Procédé selon la revendication 2, dans lequel le code alphanumérique de marquage intensif utilise un système de codage international destiné à identifier la région d'origine du propriétaire.

4. Procédé selon la revendication 2, dans lequel le code alphanumérique de marquage intensif est gravé sur des surfaces de parties du véhicule.

5. Procédé selon la revendication 1, comprenant en outre une étape consistant à installer les marquages, comportant le code alphanumérique de marquage intensif et le logo visible, sur le véhicule au niveau du poste de service, lorsque le véhicule n'a pas les marquages.

6. Procédé selon la revendication 5, comprenant en outre une étape consistant à communiquer avec le centre de service, afin de garantir que le code alphanumérique de marquage intensif fourni au véhicule ne soit pas le même qu'un quelconque code alphanumérique de marquage intensif existant, mémorisé dans la banque de données.

7. Procédé selon la revendication 5, comprenant en outre des étapes consistant à installer les marquages sur des parties du moteur et à installer les marquages sur les parties externes du véhicule.

8. Procédé selon la revendication 7, dans lequel pas moins de 50 parties du véhicule sont prévues avec les marquages.

9. Procédé selon la revendication 1, comprenant l'étape consistant à envoyer une demande d'un certificat temporaire depuis le poste de service vers le centre de service lorsque le véhicule a déjà le code alphanumérique de marquage intensif et le logo.

10. Procédé selon la revendication 9, comprenant en outre des étapes consistant à vérifier le code alphanumérique de marquage intensif et le logo sur les parties de moteur individuelles et les parties externes du véhicule lors de la réception du certificat temporaire depuis le centre de service.

11. Procédé selon la revendication 10, comprenant en outre une étape consistant à ajouter le code alphanumérique de marquage intensif sur un certain nombre de parties non-marquées sélectionnées du véhicule.

12. Procédé selon la revendication 10, comprenant en outre une étape consistant à ajouter le logo sur un certain nombre de parties non marquées sélectionnées du véhicule.

13. Procédé selon la revendication 4, comprenant en outre une étape consistant à obtenir des signatures du client et d'un agent du poste de service sur le certificat lorsque la vérification et la collecte des informations et l'inspection des dégâts existants du véhicule sont terminées.
